# EUROPEAN PATENT APPLICATION

(11) **EP 2 512 174 A1**
(43) Date of publication of application: **17.10.2012**
(21) Application number: 10835492.9
(22) Date of filing: 09.12.2010
(51) Int. Cl.: H04W 24/10

(54) **MEASUREMENT EVALUATION METHOD FOR MULTI-CARRIER SYSTEM, SYSTEM AND APPARATUS THEREOF**

(30) Priority: 09.12.2009 CN 200910242605
(71) Applicant: China Academy of Telecommunications Technology, Haidian District, Beijing 100191 (CN)
(72) Inventor: LI, Haitao, Beijing 100083 (CN); LIANG, Jing, Beijing 100083 (CN)
(74) Representative: Isarpatent
(86) International application number: PCT/CN2010/079604
(87) International publication number: WO 2011/069457

(57) **Abstract**

The embodiments of the present invention provide a measurement evaluation method, system and device for a multi-carrier system. The method includes that: UE receives measurement configuration information transmitted by an eNB, where the measurement configuration information comprises a to-be-measured frequency and report configuration; the UE determines signal quality of a measurement reference cell according to the measurement configuration information and current aggregated cells of the UE; the UE performs measurement for signal quality of a target cell on the to-be-measured frequency, and based on the signal quality of the measurement reference cell, performs evaluation for the target cell according to the report configuration; and if an evaluation result indicates that the signal quality of the target cell fulfills a report condition contained in the report configuration, the UE reports the signal quality of the target cell to the eNB. In the embodiments of the present invention, one cell is selected from multiple cells and is taken as the measurement reference cell, which can solve a problem that the aggregatable target cell and multiple current aggregated cells are evaluated and compared, so as to solve the measurement evaluation problem of the conventional multi-carrier system.

## Description

### Field of the Invention

The present invention relates to communication technologies, and more particularly to a measurement evaluation method, system and device for a multi-carrier system.

### Background of the Invention

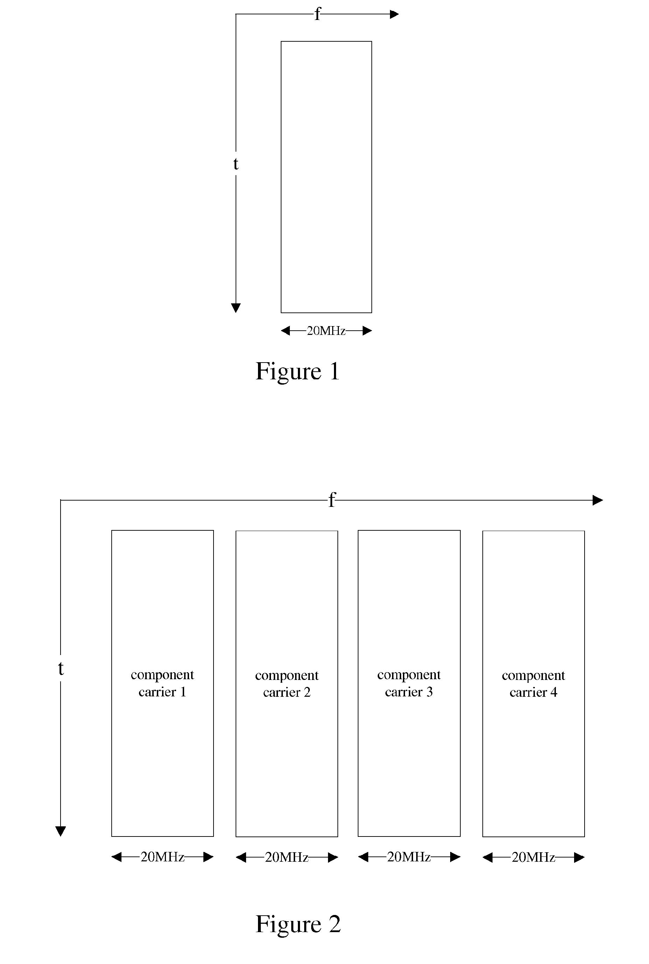

In a Long Term Evolved (LTE) system and conventional radio communication systems, one cell has only one carrier, and the maximum bandwidth of the carrier in the LTE system is 20MHz. Figure 1 is a schematic diagram illustrating the carrier distribution of a LTE cell in a conventional LTE system. However, the peak rate of a LTE Advanced (LTE-A) system is much larger than that of the LTE system. In the LTE-A system, the downlink rate is required to be 1Gbps at least, and the uplink rate is required to be 500Mbps at least. At this time, if only one carrier with the maximum bandwidth of 20MHz is used, it is difficult to meet the requirement of peak rate. Therefore, it is required to extend bandwidth available for terminals in the LTE-A system. And thus, a Carrier Aggregation (CA) technology is introduced, that is to say, multiple continuous or discontinuous carriers under the same evolved NodeB (eNB) are aggregated and served for User Equipment (UE) at the same time, to provide a required rate. The aggregated carriers are also called Component Carriers (CCs). Each cell may be a CC, and cells (CCs) under different eNBs can not be aggregated. In order to ensure that UE in the LTE system can work on each aggregated carrier, the maximum bandwidth of each carrier can not be larger than 20MHz. Figure 2 is a schematic diagram illustrating carrier aggregation in a LTE-A system in the prior art. In Figure 2, four CCs are aggregated, and the eNB may transmit data to the UE on the four CCs, to improve system throughput.

Multiple CCs are aggregated in the LTE-A system, but a measurement mechanism for the current LTE system does not consider the aggregation of multiple CCs, and thus the measurement mechanism is inapplicable to a multi-carrier system. Accordingly, it is necessary to provide an effective measurement evaluation method for the current multi-carrier system.

### Summary of the Invention

In order to solve the measurement evaluation problem of the conventional multi-carrier system, an embodiment of the present invention provides a measurement evaluation method for a multi-carrier system, including:
receiving, by User Equipment (UE), measurement configuration information transmitted by an evolved NodeB (eNB), where the measurement configuration information at least comprises a to-be-measured frequency and report configuration;
determining, by the UE, signal quality of a measurement reference cell according to the measurement configuration information and current aggregated cells of the UE;
performing, by the UE, measurement for signal quality of a target cell on the to-be-measured frequency, and based on the signal quality of the measurement reference cell, performing evaluation for the target cell according to the report configuration; and
if an evaluation result indicates that the signal quality of the target cell fulfills a report condition contained in the report configuration, reporting, by the UE, the signal quality of the target cell to the eNB.

An embodiment of the present invention also provides UE, including: a receiving module, a determining module, a measurement evaluation module and a report module, wherein
the receiving module is configured to receive measurement configuration information transmitted by an evolved NodeB (eNB) serving the UE, wherein the measurement configuration information at least comprises a to-be-measured frequency and report configuration;
the determining module is configured to determine signal quality of a measurement reference cell according to the measurement configuration information and current aggregated cells;
the measurement evaluation module is configured to perform measurement for signal quality of a target cell on the to-be-measured frequency, and based on the signal quality of the measurement reference cell, perform evaluation for the target cell according to the report configuration; and
the report module is configured to report a measurement result to the eNB when an evaluation result indicates that the measurement result fulfills a report condition contained in the report configuration.

An embodiment of the present invention also provides an eNB, including: a measurement configuration information configuring module and a transmitting module, wherein
the measurement configuration information configuring module is configured to configure measurement configuration information for User Equipment (UE) served by the eNB, where the measurement configuration information at least comprises a to-be-measured frequency and report configuration; and
the transmitting module is configured to transmit the measurement configuration information configured by the measurement configuration information configuring module to the UE, so that the UE performs measurement and evaluation for signal quality of a target cell on the frequency according to the measurement configuration information and current aggregated cells.

An embodiment of the present invention also provides a measurement evaluation system for a multi-carrier system, including: an evolved NodeB (eNB) and at least one UE served by the eNB, wherein
the eNB is configured to transmit measurement configuration information to the UE, wherein the measurement configuration information at least comprises a to-be-measured frequency and report configuration; and
the UE is configured to determine signal quality of a measurement reference cell according to the measurement configuration information and current aggregated cells; perform measurement for signal quality of a target cell on the to-be-measured frequency; based on the signal quality of the measurement reference cell, perform evaluation for the signal quality of the target cell according to the report configuration; and if an evaluation result indicates that a measurement result fulfills a report condition contained in the report configuration, report the measurement result to the eNB.

As can be seen from the embodiments of the present invention, one cell is selected from multiple cells and is taken as the measurement reference cell, which can solve a problem that the aggregatable target cell and multiple current aggregated cells are evaluated and compared, so as to solve the measurement evaluation problem of the conventional multi-carrier system.

Additional aspects and/or advantages of the present invention will be set forth in part in the description which follows and, in part, will be obvious from the description, or may be learned by practice of the present invention.

### Brief Description of the Drawings

The above and/or additional aspects and advantages of the present invention will become apparent and more readily appreciated from the following description of the exemplary embodiments, taken in conjunction with the accompanying drawings.
Figure 1 is a schematic diagram illustrating the carrier distribution of a LTE cell in a conventional LTE system.
Figure 2 is a schematic diagram illustrating carrier aggregation in a LTE-A system in the prior art.
Figure 3 is a schematic diagram illustrating an eNB to which UE belongs according to an embodiment of the present invention.
Figure 4 is a flowchart illustrating a CC management method according to a first embodiment of the present invention.
Figure 5 is a schematic diagram illustrating an eNB to which UE belongs according to another embodiment of the present invention.
Figure 6 is a flowchart illustrating mobility management according to a second embodiment of the present invention.
Figure 7 is a schematic diagram illustrating the structure of a measurement evaluation system for a multi-carrier system according to an embodiment of the present invention.

### Detailed Description of the Invention

The embodiments of the present invention will be illustrated in detail hereinafter. The examples of the embodiments are illustrated in the accompanying drawings, wherein like reference numerals indicate identical or functionally similar elements throughout. The embodiments illustrated hereinafter with reference to accompanying drawings are examples, which are only used to explain the present invention, and not used to limit the present invention.

In the LTE system, a measurement mechanism for measuring signal quality of a single cell is as follows.

Firstly, an eNB transmits measurement configuration information to UE through a Radio Resource Control (RRC) connection reconfiguration procedure. The measurement configuration information includes a measurement object, report configuration, a measurement identification (ID) and other parameters. The measurement object takes a frequency as a basic unit, and each configured measurement object is an individual frequency and has an individual measurement object ID. The report configuration includes event trigger report configuration and period trigger report configuration according to trigger types. Each report configuration has an individual ID. The event trigger report configuration configures a threshold of a certain event and duration fulfilling a trigger condition, and the period trigger report configuration configures an objective of periodical trigger, e.g., reports a Cell Global ID (CGI).

At present, there are five intra-frequency/inter-frequency measurement events, i.e., trigger report conditions contained in the report configuration, in the LTE system, which include:
1. Event A1 (Serving becomes better than threshold), which indicates that signal quality of a serving cell is better than the threshold;
2. Event A2 (Serving becomes worse than threshold), which indicates that the signal quality of a serving cell is worse than the threshold;
3. Event A3 (Neighbor becomes offset better than serving), which indicates that the signal quality of a neighbor cell is better than that of a serving cell;
4. Event A4 (Neighbor becomes better than threshold), which indicates that the signal quality of a neighbor cell is better than the threshold; and
5. Event A5 (Serving becomes worse than threshold1 and neighbour becomes better than threshold2), which indicates that the signal quality of a serving cell is worse than a threshold 1 and the signal quality of a neighbor cell is better than a threshold 2.

The measurement ID is an individual ID, and may be associated with one measurement object and report configuration at the same time. If a measurement start threshold is reached, the UE may determine, according to whether there is a measurement ID, whether to perform the measurement, that is to say, the UE determines to perform the measurement if there is a measurement ID, and the UE determines not to perform the measurement if there is no measurement ID. Other parameters may include measurement configuration, a measurement start threshold, a rate state and so on.

Secondly, the UE performs measurement (intra-frequency measurement, inter-frequency measurement or inter-RAT (Radio Access Technology) measurement) for the signal quality of a cell according to the measurement configuration information, and then reports a measurement result to the eNB. There are three trigger modes for the measurement report, i.e., an event trigger report mode, a period report mode, and an event trigger and period report mode. The three modes are differentiated according to the combination of various parameters in the report configuration. At present, a measurement report message contains a measurement ID, measurement values of the current cell including Reference Signal Received Power (RSRP) and Reference Signal Received Quality (RSRQ), and a Physical Cell ID (PCI) of a neighbor cell fulfilling conditions. Each measurement report message only reports contents corresponding to one measurement ID, i.e., cells fulfilling report configuration under one frequency. Whether measurement values and CGI of each neighbor cell are reported depends on whether a network configures the UE to report the information, that is to say, if the network configures the UE to report the information, the measurement values and CGI of each neighbor cell are reported, and if the network configures the UE not to report the information, the measurement values and CGI of each neighbor cell are not reported.

Specifically, a flowchart that the UE performs measurement and reports a measurement result is as follows.

For each measurement ID, there are a measurement evaluation procedure and a report procedure.
a) The measurement evaluation procedure: the UE finds a cell fulfilling report configuration in a certain measurement object through measurement, and performs evaluation for the cell; when a certain cell fulfills an admittance condition in a period of time (TimeToTrigger), the cell is contained in a report list; once a new cell is added into the report list, the report procedure is triggered.
b) The report procedure, i.e., a procedure of filling in a measurement report message. In the report procedure, it is needed to fill the measurement ID, measurement information of the current cell and measurement information of neighbor cells in the measurement report message. A procedure of obtaining the measurement information of neighbor cells includes: sequencing signal quality of cells contained in the report list in a) according to a report measurement value given in the measurement configuration information, and filling the cells in the measurement report message according to a sequence from high to low. The report measurement value may be a RSRP value or a RSRQ value.

However, the measurement mechanism in the above LTE system is only applied to a case that the UE has one serving cell, but in the multi-carrier system, the UE usually has multiple serving cells. And thus, the above measurement mechanism is not applicable to the multi-carrier system.

In view of the above, an embodiment of the present invention provides a measurement evaluation method for the multi-carrier system.

In the LTE-A system, i.e., in the multi-carrier system, in order to make the UE always work on a CC with better signal quality and keep service continuous when the UE moves, the network (e.g., the eNB) needs to configure measurement information for the UE on some frequencies, so that the UE may perform measurement on these frequencies according to the configured measurement information, i.e., the measurement evaluation method for the multi-carrier system can be implemented. According to the embodiment of the present invention, the measurement evaluation method for the multi-carrier system includes the following steps.

The UE receives the measurement configuration information transmitted by the eNB, where the measurement configuration information at least includes a to-be-measured frequency and report configuration;
the UE determines the signal quality of a measurement reference cell according to the measurement configuration information and the current aggregated cell;
the UE performs measurement for the signal quality of a target cell under the to-be-measured frequency, and, by taking the signal quality of the measurement reference cell as a reference, performs evaluation for the target cell according to the report configuration; and
if the evaluation result is that the signal quality of the target cell fulfills a report condition contained in the report configuration, the UE reports the signal quality of the target to the eNB.

There are one or more aggregatable target cells under the to-be-measured frequency in the measurement configuration information transmitted by the eNB.

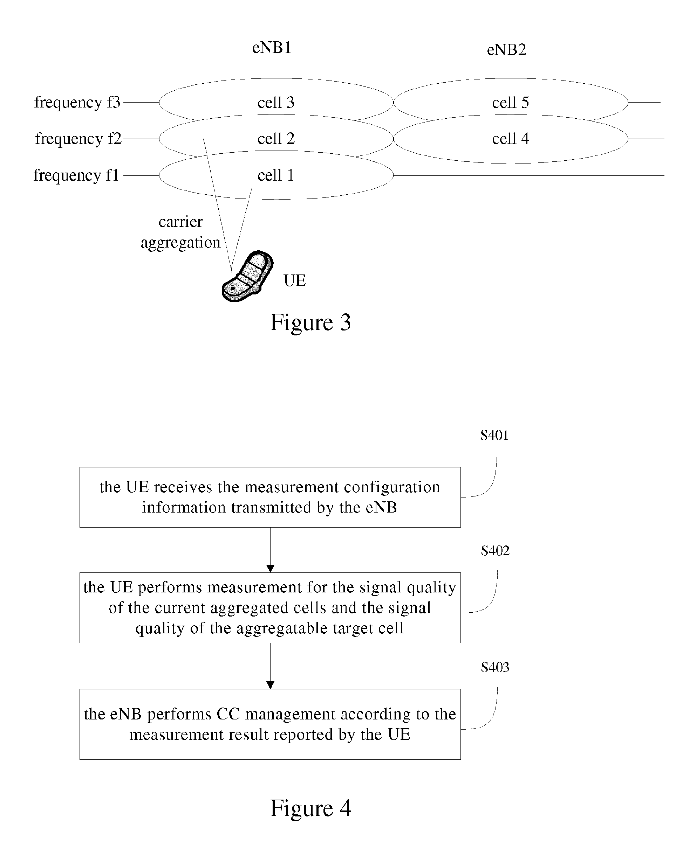

Based on the measurement evaluation method for the multi-carrier system, the network may perform CC management and mobility management (e.g., handoff), which can be implemented at the same time or separately. In an embodiment of the present invention, the CC management deactivates a certain cell according to measurement information configured for the current aggregated cells of the UE when the signal quality of the cell becomes worse, and activates a cell with better quality as possible so as to provide services for the UE. For example, Figure 3 is a schematic diagram illustrating an eNB to which the UE belongs according to an embodiment of the present invention. The UE works in aggregated cells 1 and 2 currently, and for current aggregatable carriers f1, f2 and f3, the network configures CC management measurement, so as to assist a potential deactivation operation for the cells 1 and 2 and an potential activation operation for the cell 3. In another embodiment of the present invention, for a carrier which can not be aggregated with the current serving carriers, the eNB needs to configure mobility measurement, so as to perform mobility management (e.g., handoff). Specifically, as shown in Figure 3, cells 4 and 5 are carriers which can not be aggregated by the UE, and the UE needs to perform signal quality evaluation for the two cells and reports and evaluation result; if the cells 1 and 2 under the eNB1 can not provide services for the UE because of worse signal quality and the cells 4 and 5 under the eNB2 can go on providing services for the UE because of better signal quality, the eNB will switches the UE from the cells 1 and 2 under the eNB1 to the cells 4 and 5 under the eNB2; through multi-carrier handoff, carrier aggregation transmission can be continued, so as to always provide high rate services for the UE. The CC management and mobility management of the present invention will be illustrated in detail hereinafter with reference to specific embodiments. It should be noted that, because a serving cell is not defined clearly in the current LTE-A system, a measurement reference cell is adopted in the embodiments of the present invention to describe cells corresponding to the current aggregated carriers of the UE when the measurement reference cell is compared with the measurement of target frequency in the measurement procedure. However, after the serving cell is defined clearly, the method provided by the embodiments of the present invention may be described by the concept of the serving cell according to a corresponding relation between the serving cell of the UE and the aggregated cells of the UE, or the method is described through other similar concepts, e.g., through the aggregated carriers of the UE or the cells corresponding to the aggregated carriers of the UE.

### A first embodiment

In this embodiment, the CC management will be described. In this embodiment, the eNB may configure, for each aggregated frequency of the UE, measurement for checking whether link quality becomes worse (e.g., the event A2), and configures, for other aggregatable carriers except the aggregated carriers of the UE, measurement for checking whether link quality becomes better (e.g., the event A4). Figure 4 is a flowchart illustrating a CC management method according to this embodiment of the present invention. As shown in Figure 4, the CC management includes the following processes.

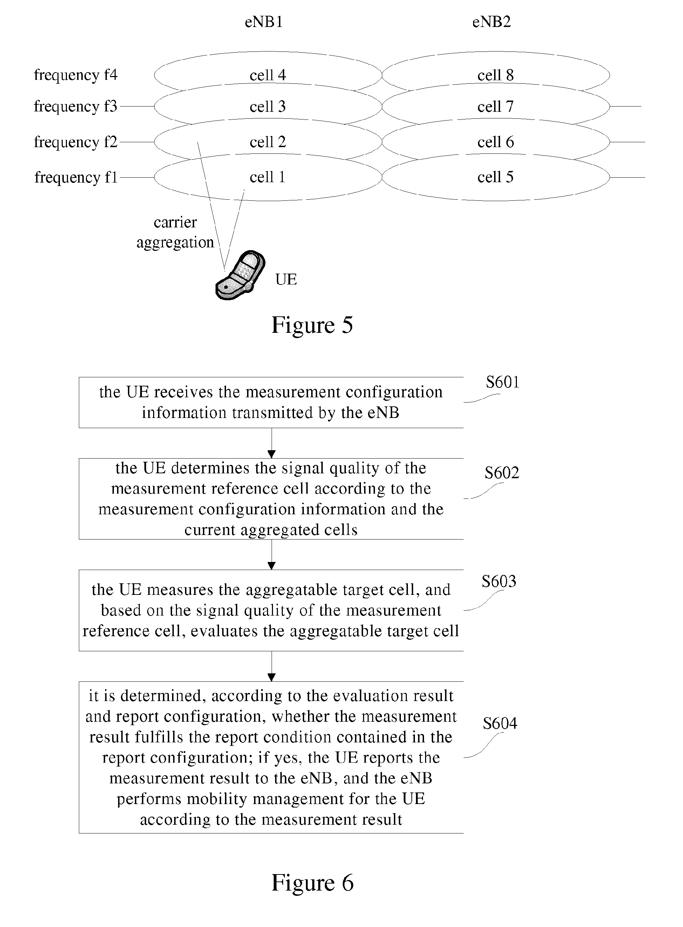

Block S401, the UE receives the measurement configuration information transmitted by the eNB, where the measurement configuration information at least includes report configuration and a frequency on which the aggregatable target cell is located. The measurement configuration information further includes a measurement ID or other parameters. Figure 5 is a schematic diagram illustrating an eNB to which the UE belongs according to an embodiment of the present invention. In this embodiment, the report configuration includes that the eNB1 configures the measurement of event A2 for the UE on frequencies f1 and f2 and configures the measurement of event A4 on frequencies f3 and f4.

Block S402, the UE performs measurement for the signal quality of the current aggregated cells and the signal quality of the aggregatable target cell, and returns a measurement result to the eNB when the signal quality fulfills a report condition contained in the report configuration. As shown in Figure 5, the UE performs measurement on four frequencies according to the report configuration, and reports the measurement result to the eNB when the measurement result on respective frequency fulfills the report condition.

Block S403, the eNB performs CC management according to the measurement result reported by the UE, e.g., for the case shown in Figure 5, the eNB determines, according to the measurement result, whether to deactivate the cell 1 / the cell 2, or activate the cell 3 / the cell 4.

### A second embodiment

The mobility management is described in the embodiment of the present invention. The mobility management may include an intra-frequency mobility measurement mode and/or inter-frequency mobility measurement. In an embodiment of the present invention, the intra-frequency mobility measurement refers to measurement for each aggregated carrier of the UE by taking the carrier as a target frequency. In the intra-frequency mobility measurement, a measurement event may be configured through a measurement event configuration mode which is the same as that used in the LTE system, or may also be configured through a special measurement event configuration mode used in the LTE-A system (e.g., a self-defined measurement event in the LTE-A system), and a cell which has the same frequency with current aggregated carriers of the UE is taken as a measurement reference cell of mobility measurement. In an embodiment of the present invention, the inter-frequency mobility measurement refers to measurement for other aggregatable carriers except the current aggregated carriers of the UE by taking the aggregatable carriers as target frequencies. In the inter-frequency mobility measurement, a measurement event may be configured through a measurement event configuration mode which is the same as that used in the LTE system, or may also be configured through a special measurement event configuration mode in the LTE-A system.

Figure 6 is a flowchart illustrating mobility management according to the second embodiment of the present invention. As shown in Figure 6, the mobility management includes the following processes.

Block S601, the UE receives the measurement configuration information transmitted by the eNB, where the measurement configuration information at least includes report configuration and a frequency on which an aggregatable target cell is located. The measurement configuration information further includes a measurement ID and other parameters. In an embodiment of the present invention, the intra-frequency mobility management measurement and the inter-frequency mobility management measurement have different report configuration modes, which will be illustrated in detail hereinafter with reference to specific embodiments. Those skilled in the art can make equivalent modification and replacement according to the idea of the present invention and the following embodiments, and the equivalent modification and replacement should be covered in the protection scope of the present invention.

Block S602, the UE determines the signal quality of the measurement reference cell according to the measurement configuration information and the current aggregated cells. In the embodiment of the present invention, the process of selecting, by the UE, the measurement reference cell according to the current aggregated cells includes:
a) taking the signal quality of a cell with the best signal quality in the current aggregated cells of the UE as the signal quality of the measurement reference cell; or
b) taking the signal quality of a cell with the worst signal quality in the current aggregated cells of the UE as the signal quality of the measurement reference cell; or
c) taking the signal quality of a special cell in the current aggregated cells of the UE as the signal quality of the measurement reference cell, where the special cell corresponds to a carrier providing security parameter input and Non-Access Stratum (NAS) mobility information for the UE, and also called a main cell; or
d) taking a general evaluation result of the signal quality of the current aggregated cells of the UE as the signal quality of the measurement reference cell, for example, performing arithmetic average and weight average for the signal quality of multiple aggregated carriers to obtain the general evaluation result of the signal quality of these carriers.

Block 603, the UE measures the aggregatable target cell, and based on the signal quality of the measurement reference cell, evaluates the aggregatable target cell according to the measurement event. For example, suppose the measurement event is the event A3, the UE evaluates, according to the event A3, whether the signal quality of the aggregatable target cell is much better than the signal quality of the measurement reference cell, and if the evaluation result indicates that the measurement result fulfills the condition of event A3, triggers a measurement report procedure. For the above solutions a), b) and c), an offset value of the measurement reference cell involved in the measurement event may be an offset value of the selected measurement reference cell; for the solution d), the offset value of the measurement reference cell involved in the measurement event may be a general evaluation result of offset values of current multiple aggregated carriers of the UE, e.g., a general evaluation result obtained by performing algorithm average or weight average for the measurement results of the aggregated cells of the UE.

Block S604, it is determined, according to the evaluation result and report configuration, whether the measurement result fulfills the report condition contained in the report configuration; if the measurement result fulfills the report condition contained in the report configuration, the UE reports the measurement result to the eNB, and the eNB performs mobility management for the UE according to the measurement result. For the solutions a) and b), because the eNB does not know the measurement reference cell determined by the UE, the UE may also report the information of the selected measurement reference cell to the eNB, e.g., report a PCI or carrier number of the measurement reference cell.

In order to make the present invention clearer, the mobility management measurement will be described hereinafter according to Figure 5.

### A third embodiment

This embodiment describes intra-frequency mobility management measurement. In this embodiment, the eNB 1 performs intra-frequency mobility management measurement configuration for the UE through RRC signaling, e.g., configures the measurement of event A3 on frequencies f1 and f2. The UE uses the current aggregated cell 1 as the measurement reference cell on the measurement of the target frequencies f1, to evaluate the signal quality of a cell (e.g., the cell 5) on the target frequency. The UE uses the current aggregated cell 2 as the measurement reference cell on the measurement on target frequency f2, to evaluate the signal quality of a cell (e.g., the cell 6) on the target frequency. Once the measurement report condition is fulfilled on frequencies f1 and f2, the UE reports the measurement result to the network.

### A fourth embodiment

The embodiment of the present invention describes inter-frequency mobility management measurement, and selects a current aggregated cell with the best signal quality as the measurement reference cell.

In this embodiment, the eNB 1 performs inter-frequency mobility management measurement configuration for the UE through RRC signaling, e.g., configures the measurement of event A5 on frequencies f3 and f4. The UE detects, e.g., according to configured CC management measurement or predefined protocol, that the signal quality of cell 1 is the best currently, and uses the cell 1 as the measurement reference cell of the inter-frequency mobility management measurement. The cell with the best signal quality for the UE side may be a certain cell whose signal quality is better than that of other cells in a period of time, and measurement related parameters (comparing time / comparing value) may be configured by the network, or self-defined by the UE or defined by a protocol. For example, the comparing value may be RSRP/RSRQ/CQI. Another solution is that a cell with the best signal quality is selected through comparing instant signal quality. The UE uses the cell 1 as the measurement reference cell on the measurement of the target frequency f3, to evaluate the signal quality of a cell (e.g., the cell 7) on the target frequency. The UE also uses the cell 1 as the measurement reference cell on the measurement of the target frequency f4, to evaluate the signal quality of a cell (e.g., the cell 8) on the target frequency. Once the measurement result on the frequencies f3 and f4 fulfills the measurement report condition, the UE reports the measurement result to the eNB1, and may carry the ID of the cell 1, e.g., a PCI or a carrier number, in the reported measurement result.

### A fifth embodiment

This embodiment describes inter-frequency mobility management measurement, and selects a current aggregated cell with the worst signal quality as the measurement reference cell.

In this embodiment, the eNB1 performs inter-frequency mobility management measurement configuration for the UE through RRC signaling, e.g., configures the measurement of event A5 on frequencies f3 and f4. The UE detects, e.g., according to configured CC management measurement or predefined protocol, that the signal quality of cell 2 is the worst currently, and uses the cell 2 as the measurement reference cell of the inter-frequency mobility management measurement. The cell with the worst signal quality for the UE side may be a certain cell whose signal quality is worse than that of other cells in a period of time, and measurement related parameters (comparing time / comparing value) may be configured by the network, or self-defined by the UE or defined by a protocol. For example, the comparing value may be RSRP/RSRQ/CQI. Another solution is that a cell with the worst signal quality is selected through comparing instant signal quality. The UE uses the cell 1 as the measurement reference cell on the measurement of the target frequency f3, to evaluate the signal quality of a cell (e.g., the cell 7) on the target frequency. The UE also uses the cell 2 as the measurement reference cell on the measurement of the target frequency f4, to evaluate the signal quality of a cell (e.g., the cell 8) on the target frequency. Once the measurement result on the frequencies f3 and f4 fulfills the measurement report condition, the UE reports the measurement result to the eNB1, and may carry the ID of the cell 2, e.g., a PCI or a carrier number, in the reported measurement result.

### A sixth embodiment

This embodiment describes inter-frequency mobility management measurement, and selects a special cell as the measurement reference cell.

In this embodiment, the eNB1 performs inter-frequency mobility management measurement configuration for the UE through RRC signaling, e.g., configures the measurement of event A5 on the frequencies f3 and f4. If the special cell currently serving the UE is the cell 1, the cell 1 is taken as the measurement reference cell of the inter-frequency mobility management measurement. The special cell currently serving the UE may be configured by the network. The UE uses the cell 1 as the measurement reference cell on the measurement of the target frequency f3, to evaluate the signal quality of a cell (e.g., the cell 7) on the target frequency. The UE also uses the cell 1 as the measurement reference cell on the measurement of the target frequency f4, to evaluate the signal quality of a cell (e.g., the cell 8) on the target frequency. Once the measurement result on the frequencies f3 and f4 fulfills the measurement report condition, the UE reports the measurement result to the eNB1.

### A seventh embodiment

This embodiment describes inter-frequency mobility management measurement, and selects a general evaluation result of signal quality of all current aggregated cells of the UE as the signal quality of the measurement reference cell.

In this embodiment, the eNB1 performs inter-frequency mobility management measurement configuration for the UE through RRC signaling, e.g., configures the measurement of event A5 on the frequencies f3 and f4. The UE detects, e.g., according to configured CC management measurement or predefined protocol, that the signal quality of the current aggregated cells 1 and 2, performs arithmetic equation for the signal quality to obtain the signal quality of the measurement reference cell. The UE uses the signal quality of the measurement reference cell on the measurement of the target frequency f3, to evaluate the signal quality of a cell (e.g., the cell 7) on the target frequency. The UE also uses the signal quality of the measurement reference cell on the measurement of the target frequency f4, to evaluate the signal quality of a cell (e.g., the cell 8) on the target frequency. Once the measurement result on the frequencies f3 and f4 fulfills the measurement report condition, the UE reports the measurement result to the eNB 1.

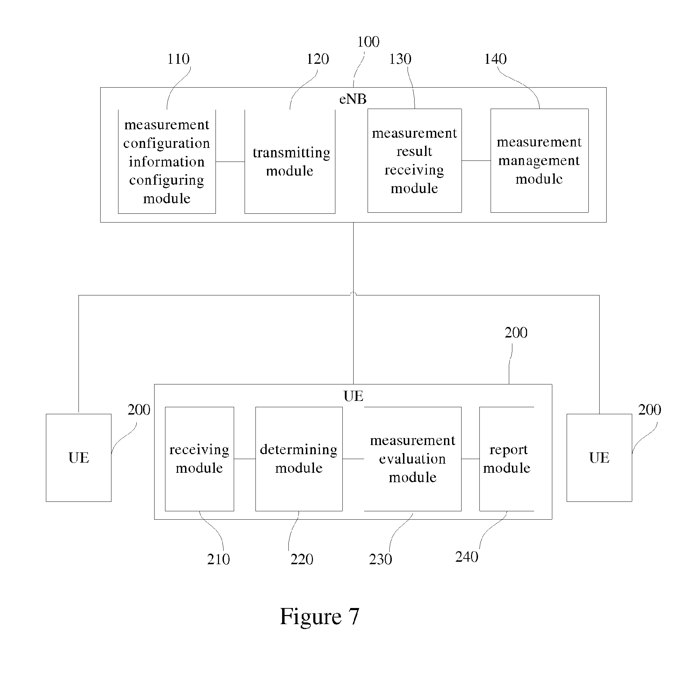

Figure 7 is a schematic diagram illustrating the structure of a measurement evaluation system for a multi-carrier system according to an embodiment of the present invention. As shown in Figure 7, the system includes an eNB 100 and at least one UE 200 served by the eNB 100. The eNB 100 is configured to transmit measurement configuration information to the UE 200, where the measurement configuration information at least includes report configuration and a frequency on which an aggregatable target cell is located. The UE 200 is adapted to determine signal quality of a measurement reference cell according to the measurement configuration information and the current aggregated cells, and perform measurement for the aggregatable target cell on the frequency; evaluate the aggregatable target cell according to the signal quality of the measurement reference cell, and determines, according to the evaluation result and the report configuration, whether the measurement result fulfills a report condition contained in the report configuration; if the report condition is met, report the measurement result to the eNB 100.

The eNB 100 includes a measurement configuration information configuring module 110 and a transmitting module 120. The measurement configuration information configuring module 110 is configured to configure measurement configuration information for the UE 200, where the measurement configuration information at least includes report configuration and a frequency on which a aggregatable target cell is located. The transmitting module 120 is configured to transmit the measurement configuration information configured by the measurement configuration information configuring module 110 to the UE 200.

In an embodiment of the present invention, the eNB 100 further includes a measurement result receiving module 130 and a measurement management module 140. The measurement result receiving module 130 is configured to receive the measurement result transmitted by the UE 200. The measurement management module 140 is configured to perform CC management and/or mobility management for the UE 200 according to the measurement result.

The UE 200 includes a receiving module 210, a determining module 220, a measurement evaluation module 230 and a report module 240. The receiving module 210 is configured to receive the measurement configuration information transmitted by the eNB 100, where the measurement configuration information at least includes report configuration and a frequency on which an aggregatable target cell is located. The determining module 220 is configured to determine the signal quality of the measurement reference cell according to the measurement configuration information and the current aggregated cells. The measurement evaluation module 230 is configured to perform signal quality measurement for the aggregatable target cell on the frequency, and based on the signal quality of the measurement reference cell, perform evaluation for the aggregatable target cell according to the report condition in the report configuration. The report module 240 is configured to report the measurement result to the eNB 100 when the evaluation result indicates that the measurement result fulfills the report condition in the report configuration.

In an embodiment of the present invention, the determining module 220 takes the best signal quality in the signal quality of the current aggregated cells as the signal quality of the measurement reference cell, or the determining module 220 takes the worst signal quality in the signal quality of the current aggregated cells as the signal quality of the measurement reference cell, or the determining module 220 takes the signal quality of a special cell in the current aggregated cells as the signal quality of the measurement reference cell, where the special cell corresponds to a carrier providing security parameter input and NAS mobility information for the UE200, or the determining module 220 takes a general evaluation result of signal quality of current aggregated cells of the UE200 as the signal quality of the measurement reference cell, e.g., perform arithmetic average and weight average for the signal quality of multiple aggregated carriers to obtain the general evaluation result of these carriers.

In an embodiment of the present invention, the report module 240 reports the selected measurement reference cell to the eNB 100. Specifically, the report module 240 reports the PCI or carrier number of the selected measurement reference cell to the eNB 100.

In an embodiment of the present invention, the measurement evaluation module 230 performs carrier management and/or mobility management measurement, where the mobility management measurement includes intra-frequency mobility management measurement and inter-frequency mobility management measurement.

In the embodiments of the present invention, one cell is selected from multiple cells and is taken as a measurement reference cell, which can solve a problem that the aggregatable target cell and multiple current aggregated cells are evaluated and compared, so as to solve the measurement evaluation problem of the conventional multi-carrier system.

The foregoing is only preferred examples of the present invention and is not used to limit the protection scope of the present invention. Any modification, equivalent substitution and improvement without departing from the spirit and principle of the present invention are within the protection scope of the present invention.

## Claims

1. A measurement evaluation method for a multi-carrier system, comprising:
receiving, by User Equipment (UE), measurement configuration information transmitted by an evolved NodeB (eNB), wherein the measurement configuration information at least comprises a to-be-measured frequency and report configuration;
determining, by the UE, signal quality of a measurement reference cell according to the measurement configuration information and current aggregated cells of the UE;
performing, by the UE, measurement for signal quality of a target cell on the to-be-measured frequency, and based on the signal quality of the measurement reference cell, performing evaluation for the target cell according to the report configuration; and
if an evaluation result indicates that the signal quality of the target cell fulfills a report condition contained in the report configuration, reporting, by the UE, the signal quality of the target cell to the eNB.

2. The method of claim 1, wherein selecting, by the UE, the measurement reference cell according to the current aggregated cells comprises:
taking signal quality of a cell with the best signal quality in the current aggregated cells of the UE as the signal quality of the measurement reference cell; or
taking signal quality of a cell with the worst signal quality in the current aggregated cells of the UE as the signal quality of the measurement reference cell; or
taking signal quality of a special cell in the current aggregated cells of the UE as the signal quality of the measurement reference cell, wherein the special cell corresponds to a carrier providing security parameter input and Non-Access Stratum (NAS) mobility information for the UE; or
taking a general evaluation result of the signal quality of the current aggregated cells of the UE as the signal quality of the measurement reference cell.

3. The method of claim 2, further comprising:
reporting, by the UE, the selected measurement reference cell to the eNB.

4. The method of claim 3, wherein reporting, by the UE, the selected measurement reference cell to the eNB comprises:
reporting a Physical Cell Identification (PCI) or carrier number of the selected measurement reference cell to the eNB.

5. The method of claim 2, wherein if the general evaluation result of signal quality of the current aggregated cells of the UE is taken as the signal quality of the measurement reference cell, an offset value of the measurement reference cell is a general evaluation result of offset values of the current aggregated cells.

6. The method of claim 1 or 2, further comprising:
performing component carrier management measurement according to the report configuration.

7. The method of claim 6, wherein the report configuration comprises:
an event of monitoring that signal quality becomes worse for each current aggregated cell of the UE, and an event of monitoring that signal quality becomes better for the target cell of the UE, wherein the events are configured by the eNB.

8. The method of any of claims 1, 2 and 6, further comprising:
performing mobility management measurement.

9. The method of claim 8, wherein the mobility management measurement is intra-frequency mobility management measurement, a frequency of each current aggregated cell is the same as the frequency of the target cell, and the report configuration comprises configuring an intra-frequency measurement event for each current aggregated cell of the UE.

10. The method of claim 8, wherein the mobility management measurement is inter-frequency mobility management measurement, a frequency of each current aggregated cell is different from the frequency of the target cell, and the report configuration comprises configuring an inter-frequency measurement event for each current aggregated cell of the UE.

11. A User Equipment (UE), located in a multi-carrier system, comprising a receiving module, a determining module, a measurement evaluation module and a report module, wherein
the receiving module is configured to receive measurement configuration information transmitted by an evolved NodeB (eNB) serving the UE, wherein the measurement configuration information at least comprises a to-be-measured frequency and report configuration;
the determining module is configured to determine signal quality of a measurement reference cell according to the measurement configuration information and current aggregated cells;
the measurement evaluation module is configured to perform measurement for signal quality of a target cell on the to-be-measured frequency, and based on the signal quality of the measurement reference cell, perform evaluation for the target cell according to the report configuration; and
the report module is configured to report a measurement result to the eNB when an evaluation result indicates that the measurement result fulfills a report condition contained in the report configuration.

12. The UE of claim 11, wherein the determining module is configured to take signal quality of a cell with the best signal quality in the current aggregated cells as signal quality of the measurement reference cell; or
the determining module is configured to take signal quality of a cell with the worst signal quality in the current aggregated cells as signal quality of the measurement reference cell; or
the determining module is configured to take signal quality of a special cell in the current aggregated cells as signal quality of the measurement reference cell, wherein the special cell corresponds to a carrier providing security parameter input and Non-Access Stratum (NAS) mobility information for the UE; or
the determining module is configured to take a general evaluation result of signal quality of the current aggregated cells of the UE as signal quality of the measurement reference cell.

13. The UE of claim 11 or 12, wherein the report module is further configured to report the determined measurement reference cell to the eNB.

14. The UE of claim 13, wherein the report module is configured to report a Physical Cell Identification (PCI) or carrier number of the determined measurement reference cell to the eNB.

15. The UE of claim 11 or 12, wherein the measurement evaluation module is configured to perform component carrier management measurement and/or mobility management measurement.

16. The UE of claim 15, wherein the mobility management measurement comprises intra-frequency mobility management measurement and inter-frequency mobility management measurement.

17. An evolved NodeB (eNB) in a multi-carrier system, comprising a measurement configuration information configuring module and a transmitting module, wherein
the measurement configuration information configuring module is configured to configure measurement configuration information for User Equipment (UE) served by the eNB, wherein the measurement configuration information at least comprises a to-be-measured frequency and report configuration; and
the transmitting module is configured to transmit the measurement configuration information configured by the measurement configuration information configuring module to the UE, so that the UE performs measurement and evaluation for signal quality of a target cell on the frequency according to the measurement configuration information and current aggregated cells.

18. The eNB of claim 17, further comprising a measurement result receiving module and a measurement management module, wherein
the measurement result receiving module is configured to receive a measurement result of the signal quality transmitted by the UE; and
the measurement management module is configured to perform component carrier management and/or mobility management for the UE according to the measurement result.

19. A measurement evaluation system for a multi-carrier system, comprising an evolved NodeB (eNB) and at least one UE served by the eNB, wherein
the eNB is configured to transmit measurement configuration information to the UE, wherein the measurement configuration information at least comprises a to-be-measured frequency and report configuration; and
the UE is configured to determine signal quality of a measurement reference cell according to the measurement configuration information and current aggregated cells; perform measurement for signal quality of a target cell on the to-be-measured frequency; based on the signal quality of the measurement reference cell, perform evaluation for the signal quality of the target cell according to the report configuration; and if an evaluation result indicates that a measurement result fulfills a report condition contained in the report configuration, report the measurement result to the eNB.
